# EUROPEAN PATENT SPECIFICATION

(11) **EP 1 450 387 B1**
(45) Date of publication and mention of the grant of the patent: **09.01.2008**
(21) Application number: 04250726.9
(22) Date of filing: 11.02.2004
(51) Int. Cl.: H01J 9/02, H01J 1/304

(54) **Method of manufacturing field emission device**
Verfahren zur Herstellung einer Feldemissionsvorrichtung
Procédé de fabrication d'un dispositif à émission par effet de champ

(30) Priority: 12.02.2003 KR 2003008762
(43) Date of publication of application: 25.08.2004
(73) Proprietor: Samsung SDI Co., Ltd., Suwon-si, Gyeonggi-do (KR)
(72) Inventor: Lee, Jeong-hee, Bundang-gu, Seongnam-si Gyeonggi-do (KR); Park, Shang-hyeun, Boryeong-si Chungcheongnam-do (KR); Lee, Hang-woo, Yeongtong-gu, Suwon-si Gyeonggi-do (KR); Kim, You-jong, Seocho-gu Seoul (KR)
(74) Representative: Ertl, Nicholas Justin

(56) References cited:
- EP-A- 1 115 135
- WO-A-02/078059
- US-A1- 2001 044 251
- US-B1- 6 440 761

## Description

### BACKGROUND OF THE INVENTION

The present invention relates to a method of manufacturing an electric field device, and more particularly, to a method of manufacturing an electric field device that can uniformly emit light having a high brightness.

Carbon nanotubes (CNTs) have a small diameter and a high aspect ratio of diameter to length and thus can emit electrons even at a low voltage. Since the CNTs have excellent electron emission characteristics and are chemically and physically durable, extensive studies have been performed on the physical properties and applicability thereof. Meanwhile, spindt-type field emission devices use metal micro tips as electron emitters. The micro tips have a problem that the life span is reduced under atmospheric gas and a non-uniform electric field during emission of electrons. A low work function of an emitter is required in order to lower a driving voltage for emitting electrons, but conventional micro tips are reaching the technical limit. To overcome these problems, field emission arrays (FEAs) using the foregoing CNTs as electron emitting sources have been developed because the CNTs have a high aspect ratio and are highly durable and conductive.

U.S. Patent No. 6,440,761 discloses an FEA using a paste mixture of electron emission materials and a method of fabricating the same. U.S. Patent No. 6,339,281 discloses an FEA and a method of fabricating the same, in which CNTs formed by a growth method are used as emitters. Generally, since it is easier to form emitters using a paste mixture than by a growth method, the former method is preferred.

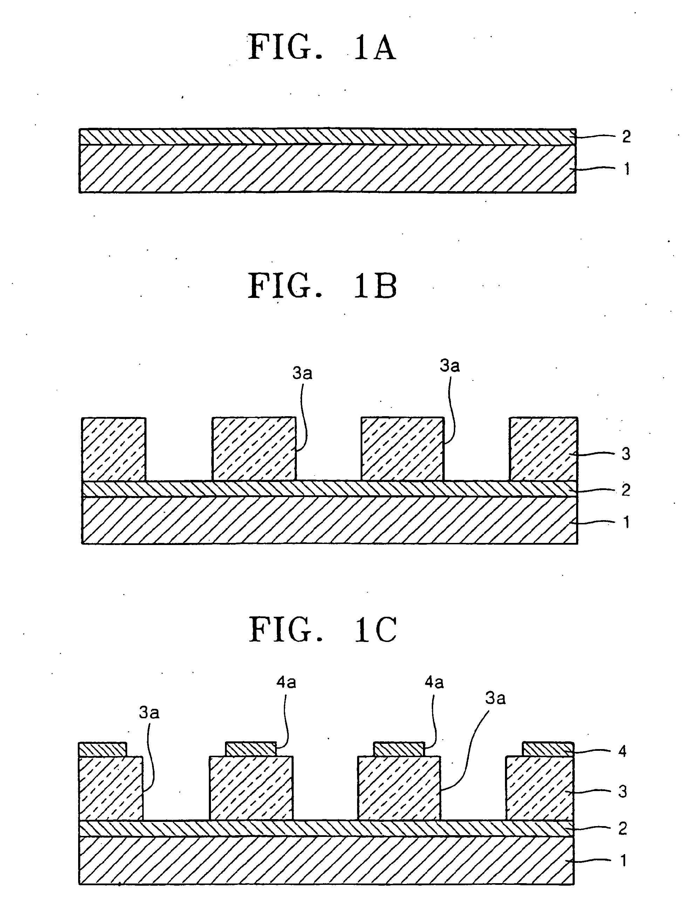

The conventional method of manufacturing a field emission device using a paste mixture will now be described briefly with reference to FIGs. 1A through 1 G.

Referring to FIG. 1A, a cathode electrode 2 is formed on a substrate 1 formed of, for example, soda lime glass. The cathode electrode 2 is formed by depositing indium tin oxide ([TO) and patterning the same using a photolithography process.

Referring to FIG. 1B, a gate insulating layer 3 is formed over the substrate 1. The gate insulating layer 3 has holes 3a, which expose portions of the cathode electrode 2. The gate insulating layer 3 can be formed using, for example, a screen printing technique.

Referring to FIG. 1C, a gate electrode 4 is formed on the gate insulating layer 3. The gate electrode 4 has gate holes 4a, which correspond to the holes 3a. The gate electrode 4 is formed by depositing a metal and patterning the same using a thin-film forming process or a thick-film forming process. Alternatively, the gate electrode 4 may be formed by a screen printing technique using a metal paste.

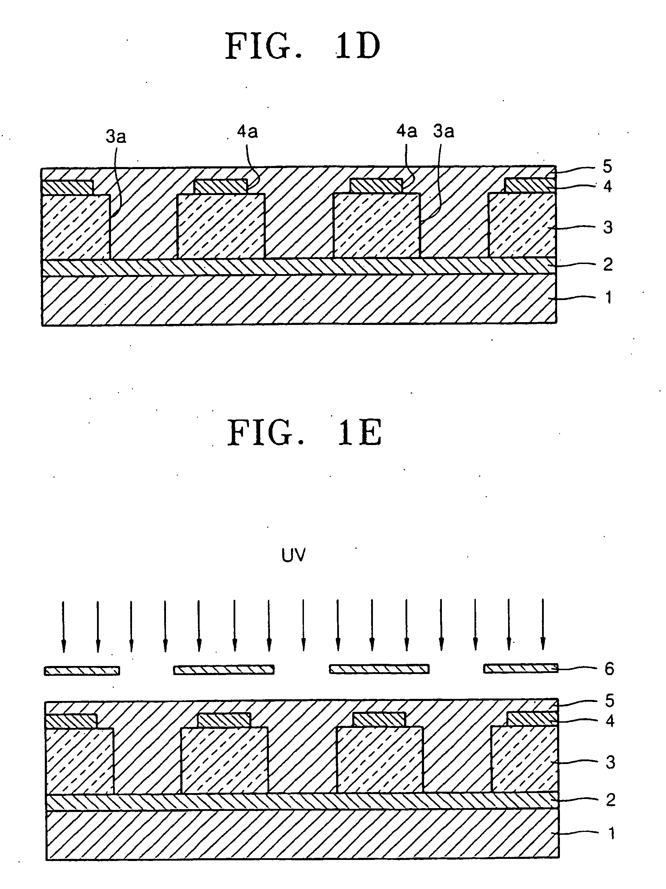

Referring to FIG. 1 D, a paste-type electron emission material layer 5 is formed to cover the gate electrode 4 and fill the gate holes 4a. The paste-type electron emission material layer 5 is formed of photoresist and electron emission materials, such as CNTs or nanoparticles.

Referring to FIG. 1 E, the electron emission material layer 5 is exposed using a mask 6. Since the electron emission material layer 5 contains a negative photoresist, if ultraviolet (UV) rays are irradiated into the holes 3a, the photoresist in the holes 3a is cured by the exposure process.

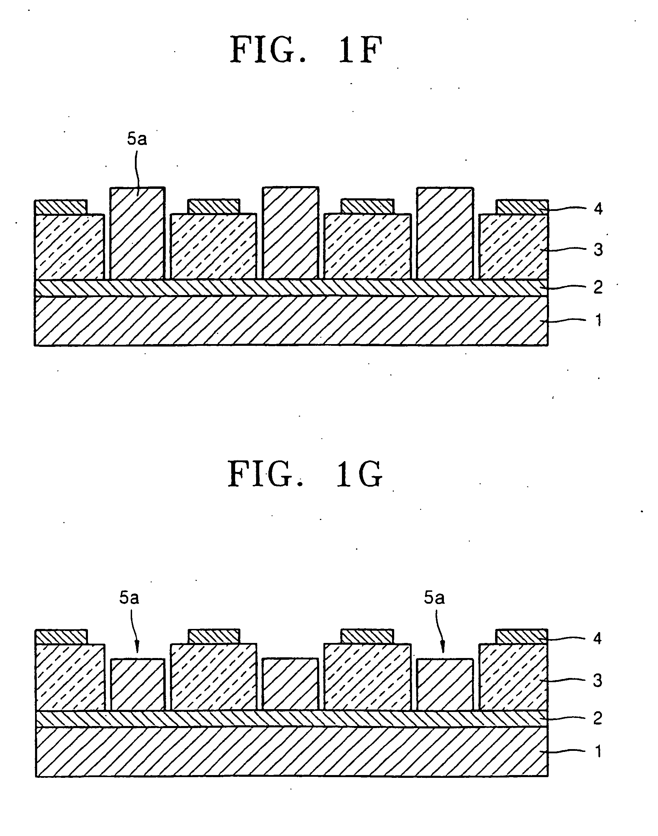

Referring to FIG. 1 F, the electron emission material layer 5 is developed, thereby forming emitters 5a in the holes 3a using the remaining electron emission materials.

Referring to FIG. 1 G, the emitters 5a are completely hardened and constricted by firing the emitters 5a at a predetermined temperature, thereby becoming lower in height than the gate holes 4a.

The above-described conventional method has the following problems. While the emitters 5a are being formed using the electron emission material layer 5, a portion of the electron emission materials is very likely to remain around the gate holes 4a. The remaining portion of the electron emission materials causes a short circuiting between the emitters 5a and the gate electrode 4, which adversely affects the field emission device. The short circuiting between the emitters 5a and the gate electrode 4 makes it impossible to uniformly emit light having a high brightness and emit electrons at a certain portion where the short circuiting occurs. These problems are caused by the photolithography process, which leads the electron emission materials to contact the gate electrode 4. Accordingly, to solve the foregoing problems, it is required to prevent the electron emission materials from contacting the gate electrode 4. For this, a lift-off process can be used. As is well known, according to the lift-off process, a sacrificial layer for lift-off is formed in a region excluding portions where emitters will be formed. Thus, the sacrificial layer for lift-off can prevent electron emission materials from contacting a gate electrode so as not to cause a short circuiting therebetween. Also, the lift-off can prevent unnecessary materials from remaining around gate holes. However, when the lift-off is actually used, emitters cannot be patterned using a developing solution or a lift-off solution due to a strong chemical combination of photosensitive materials of the electron emission materials with certain materials of the sacrificial layer. Therefore, when emitters are intended to be formed using the lift-off process, a chemical combination of the sacrificial layer with the electron emission materials should be prevented.

### SUMMARY OF THE INVENTION

According to an aspect of the present invention, there is provided a method of manufacturing a field emission device. The method comprises (a) preparing a substrate structure, the substrate structure comprising a substrate, a cathode electrode formed on the substrate, a gate insulating layer formed on the cathode electrode, the gate insulating layer having holes that expose portions of the cathode electrode, and a gate electrode having gate holes that correspond to the holes, the cathode electrode, the gate insulating layer, and the gate insulating layer being sequentially stacked on the substrate; (b) forming a sacrificial layer on a surface of the substrate structure excluding the portions of the cathode electrode, which are exposed by the holes, and on inner walls of the holes; (c) forming an isolation layer on the sacrificial layer, the isolation layer for preventing electron emission materials for forming emitters from contacting the sacrificial layer; (d) forming an electron emission material layer by depositing the emission electron materials on the surface of the substrate structure where the sacrificial layer is formed, the electron emission material layer filling the holes; (e) removing the isolation layer and the electron emission materials, which are formed on the sacrificial layer, and forming the emitters inside the holes using the electron emission material layer by performing a lift-off process using an etchant, the lift-off process for removing the sacrificial layer that is formed on the surface of the gate electrode and the inner walls of the holes; and (f) firing the emitters.

The present invention thus provides a method of manufacturing a field emission device that uniformly emits light with high brightness. The method also prevents short circuiting caused by remaining electron emission materials, thus forming emitters having excellent electron emission characteristics.

The electron emission materials can be one of carbon nanotubes and nanoparticles. The electron emission material layer can be formed of a conductive material. The conductive material is formed of Ag. The isolation layer can be formed of a resistive material.

The isolation layer can be formed using one selected from the group consisting of a paste, a sol-gel, and a slurry solution. The electron emission material layer can be formed of a conductive material using one selected from the group consisting of a paste, a sol-gel, and a slurry solution.

The electron emission material layer and the sacrificial layer can be formed of a photoresist. The isolation layer can be formed using an IPA/H₂O solution containing polyvinyl alcohol.

### BRIEF DESCRIPTION OF THE DRAWINGS

Examples of the invention will now be described in detail with reference to the attached drawings in which:
FIGs. 1 A through 1G are cross-sectional views illustrating a conventional method of manufacturing a field emission device;
FIG. 2 is a cross-sectional view of a field emission device manufactured by a method according to the present invention;
FIGs. 3A through 31 are cross-sectional views illustrating a method of manufacturing a field emission device according to an embodiment of the present invention;
FIGS. 4A and 4B are photographs showing electron emission of a field emission device manufactured by a conventional method comprising a screen printing technique and a photolithography process and using neither a sacrificial layer nor an isolation layer;
FIGs. 5A and 5B are photographs showing electron emission of a field emission device manufactured by a method according to the present invention;
FIG. 6A is a graph showing a relationship between an anode current and a gate voltage of the field emission device manufactured by the method according to the present invention; and
FIG. 6B is a graph showing a relationship between brightness and a gate voltage of the field emission device manufactured by the method according to the present invention.

### DETAILED DESCRIPTION OF THE INVENTION

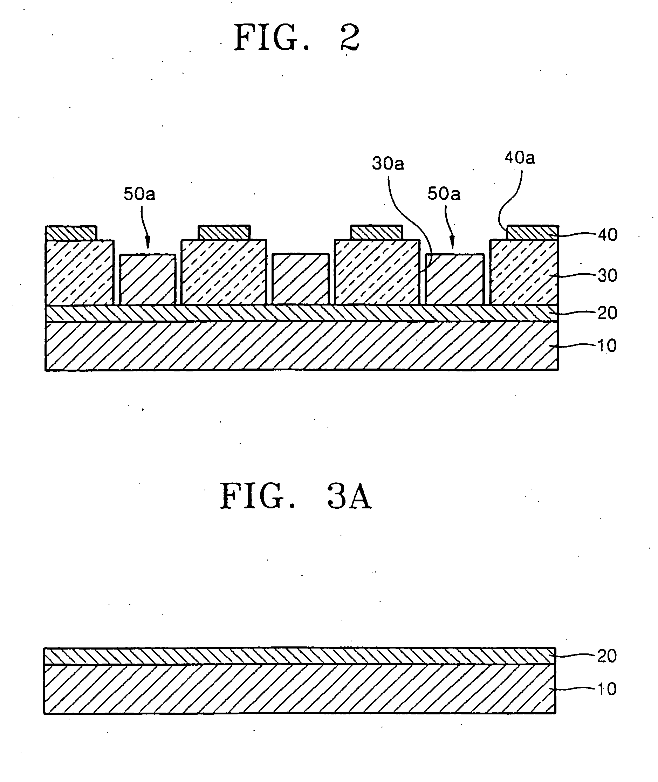

The structure of a field emission device manufactured by the method according to the present invention will now be described with reference to FIG. 2.

Referring to FIG. 2, a cathode electrode 20 is formed on a substrate 10, and a gate insulating layer 30 is formed thereon. Well-type holes 30a having a predetermined diameter and depth are formed in the gate insulating layer 30. Emitters 50a are formed at bottoms of the well-type holes 30a, i.e., on portions of the cathode electrode 20, which are exposed by the well-type holes 30a.

A typical field emission device has the above-described known structure, in which the remaining material, e.g., a resistive material, of an isolation layer that is used in the method of the present invention may or may not remain at lower portions of the emitters 50a.

A gate electrode 40 is formed on the gate insulating layer 30. The gate electrode 40 includes gate holes 40a via which electrons are extracted from the emitters 50a.

An electron emission material of the present invention contains CNTs or nanoparticles, which enable the emission of electrons by an electric field. Also, the emitters 50a can be formed of particles of highly conductive metals, such as Ag and Ti, to enhance the supply of a current.

If the resistive material, i.e., the remaining material of the isolation layer, remains at the lower portions of the emitters 50a as described above, the resistive material allows a current to be uniformly supplied even to emission points of the CNTs or nanoparticles, which are uniformly distributed in the emitters 50a, which are highly conductive due to the conductive metal particles. The resistive material is preferably formed to a predetermined thickness to effectively aid the above-described supply of the current.

When a field emission device is manufactured, a sacrificial layer may contact emitters. Thus, a reaction of materials of the sacrificial layer on materials of the emitters is very likely to occur. The sacrificial layer may be formed of novolac photosensitive resin. If a solvent, e.g., Texanol, which has a strong solubility against the resin, is included in the electron emission materials, an attack against the sacrificial layer by the solvent is unavoidable. That is, when the electron emission materials contact the sacrificial layer, if the highly soluble Texanol dissolves a novolac matrix of the sacrificial layer, ingredients of the dissolved novolac matrix are mixed with ingredients of an acrylic matrix of the electron emission materials, thus inducing a tight combination of the two matrixes. In this state, it is impossible to pattern emitters using a developing solution or a lift-off solvent. Accordingly, in the present invention, an isolation layer is formed on the sacrificial layer to prevent materials of the sacrificial layer from contacting the electron emission materials of the emitters 50a.

Hereinafter, a method of manufacturing a field emission device according to an embodiment of the present invention will be described with reference to FIGs. 3A through 31.

Referring to FIG. 3A, a cathode electrode 20 is formed on a substrate 10 formed of soda lime glass. To form the cathode electrode 20, an ITO is deposited on the substrate 10 and patterned using a photolithography process.

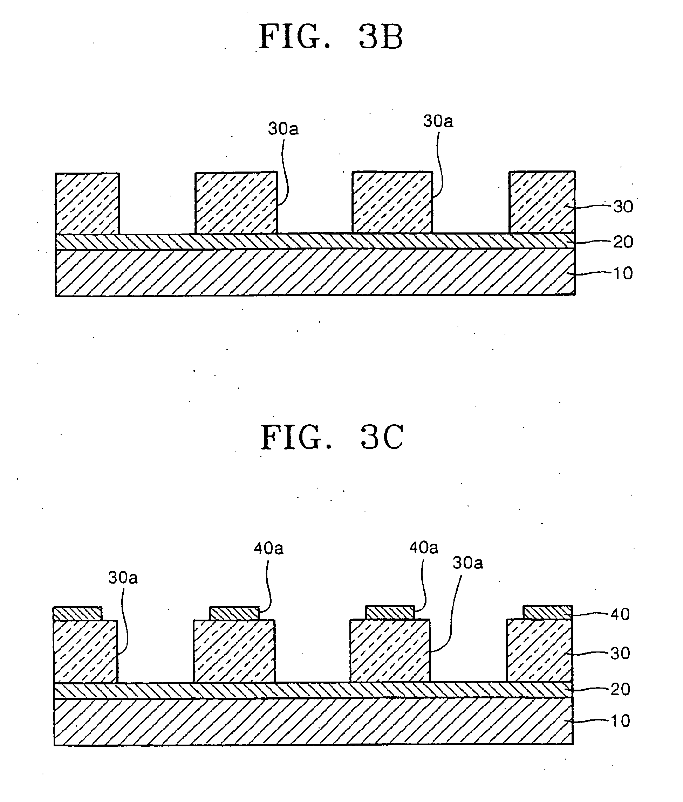

Referring to FIG. 3B, a gate insulating layer 30 is formed over the substrate 10. Holes 30a are formed in the gate insulating layer 30 such that portions of the cathode electrode 20 are exposed. The gate insulating layer 30 can be formed by a screen printing technique or other various known methods including deposition and patterning of an insulating material.

Referring to FIG. 3C, a gate electrode 40 is formed on the gate insulating layer 30. Gate holes 40a are formed in the gate electrode 40 so as to correspond to the holes 30a. The gate electrode 40 can be formed by a thin-film forming process including deposition and patterning of a metal material or a thick-film forming process including a screen printing technique using a metal paste.

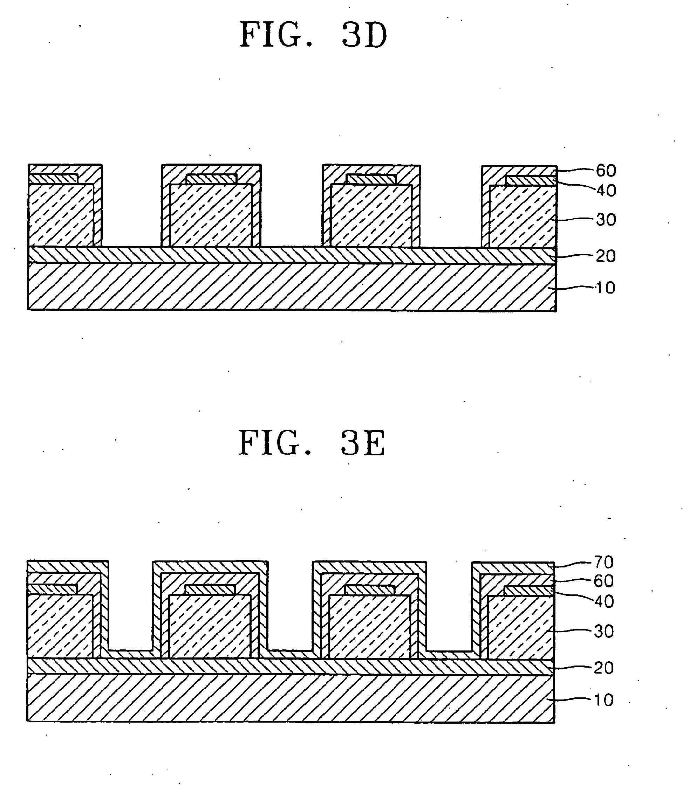

Referring to FIG. 3D, a sacrificial layer 60 for lift-off is formed on a surface of the gate electrode 40 and inner walls of the holes 30a, excluding bottoms of the holes 30a. The sacrificial layer 60 is formed by a screen printing technique using a paste or a spin coating method using a sol-gel or a slurry solution and soft-baked.

Referring to FIG. 3E, an isolation layer 70 is formed on the sacrificial layer 60. Like the sacrificial layer 60, the isolation layer 70 is formed by a screen printing technique using a paste or a spin coating method using a sol-gel or a slurry solution and soft-baked. The isolation layer 70 should be formed of a material that does not react on the sacrificial layer 60 or hardly reacts thereon so as not to hinder the entire manufacturing process. Also, the isolation layer 70 should be formed of a material that hardly reacts on electron emission materials which will be formed on the isolation layer 70. As described above, the isolation layer 70 can be formed of a resistive material to form a material layer resistive to lower portions of the emitters and also may be formed of photosensitive photoresist. The resistive material can be at least one selected from the group consisting of SiO₂, MgO, a-Si, and p-Si. If the isolation layer 70 does not include a resistive material but is used only to prevent electron emission materials from contacting the sacrificial layer 60, the isolation layer 70 is not formed on the bottoms of the holes 30 so as not to cover the cathode electrode 20 like the sacrificial layer 60 does.

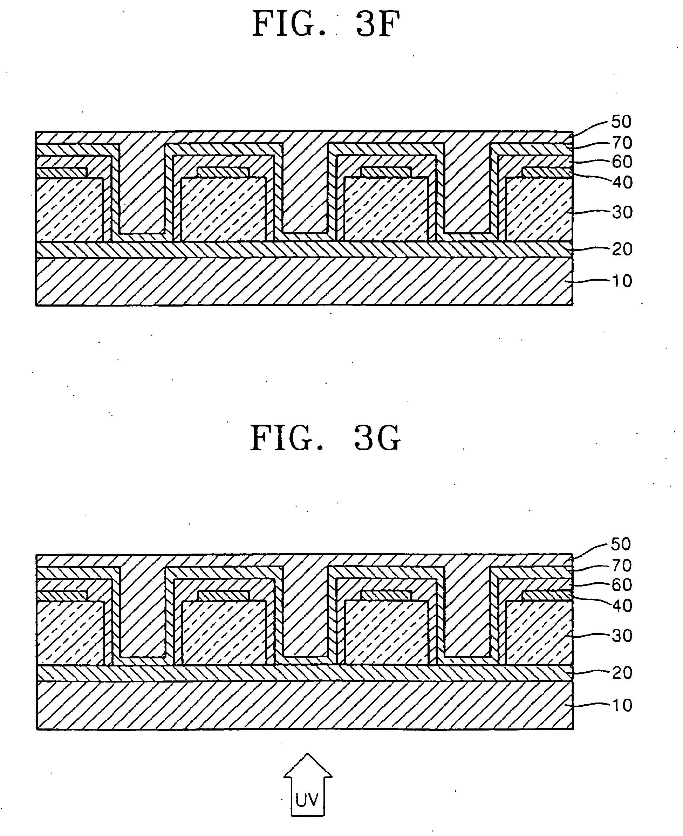

Referring to FIG. 3F, an electron emission material layer 50 is formed on the resultant structure using photoresist and electron emission materials, such as CNTs or nanoparticles. The electron emission material layer 50 can be formed of conductive particles, e.g., Ag; to enhance the supply of a current. This electron emission material layer 50 can be formed by a screen printing technique using a paste or a spin coating method using a sol-gel or a slurry solution.

Referring to FIG. 3G, the sacrificial layer 60 and the electron emission material layer 50 are cured by heating or using ultraviolet (UV) rays.

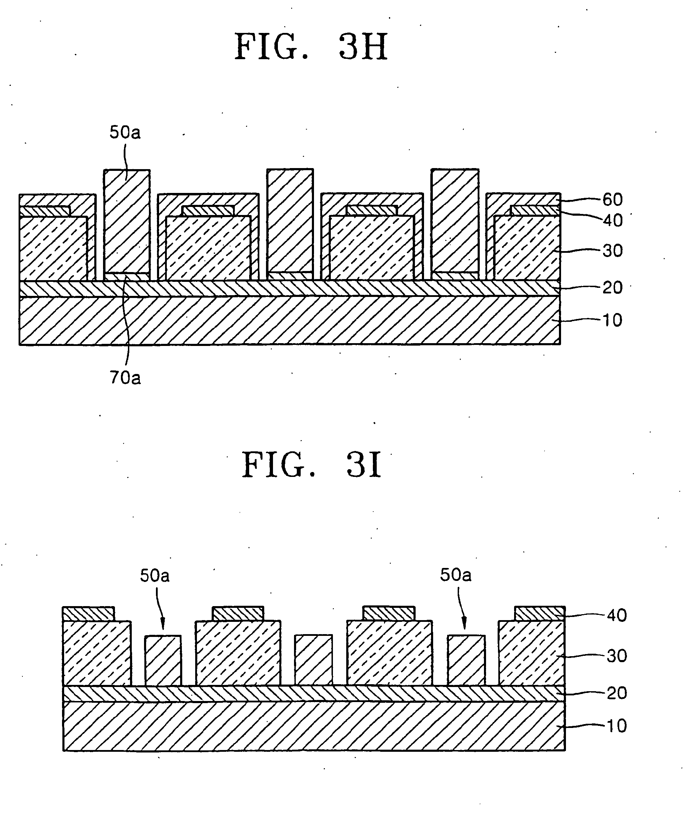

Referring to FIG. 3H, a lift-off process for removing the sacrificial layer 60 using an etchant is performed, thereby forming preliminary emitters 50a only in the center of the bottoms of the holes 30a. The preliminary emitters 50a are comprised of the remaining portion of the isolation layer 70 and the electron emission material layer 50.

Referring to FIG. 31, the emitters 50a are fired at a predetermined temperature and completely hardened and constricted. Thus, the tops of the emitters 50a become lower in height than the gate holes 40a. As the result of firing, pyrolytic ingredients are completely removed from the remaining isolation layer 70, and the resistive material remains to a very small thickness.

In the present invention, an isolation layer is interposed between a sacrificial layer and an electron emission material layer, thereby preventing the sacrificial layer formed of a photoresist from reacting on the electron emission material layer. Thus, a tight combination can be prevented between the sacrificial layer and the electron emission material layer so as to facilitate a lift-off process for forming emitters.

If a resistive material layer is disposed at the lower portions of the emitters according to the embodiment of the present invention, the resistive material layer allows a current to be uniformly supplied to a highly conductive electron emission material layer. Thus, the emitters can have uniform electron emission characteristics.

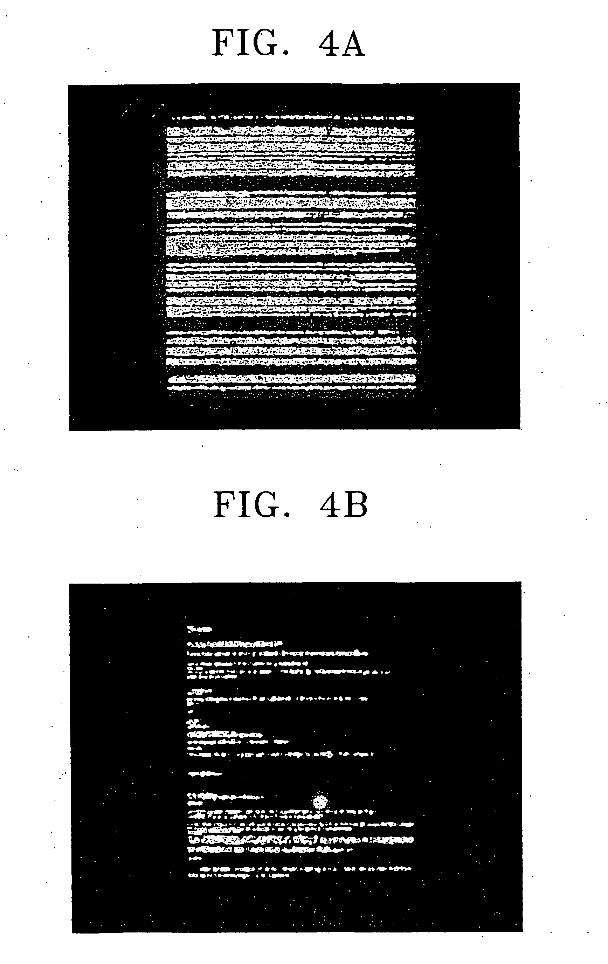

FIGs. 4A and 4B are photographs showing electron emission of a field emission device manufactured by a conventional method comprising a screen printing method and a photolithography process and using neither a sacrificial layer nor an isolation layer. FIG. 4A shows screen brightness in conditions of an anode voltage of 1 KV, a gate voltage of 55 V, and an electron emission current of 367.5 µA, while FIG. 4B shows screen brightness in conditions of an anode voltage of 1 KV, a gate voltage of 50 V, and an electron emission voltage of 58.6 µA.

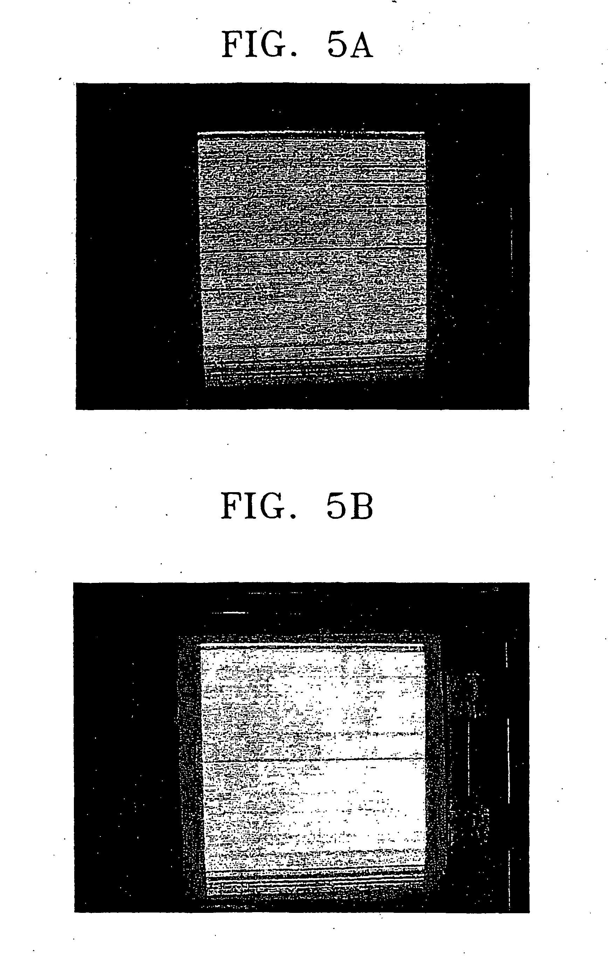

FIGs. 5A and 5B are photographs showing electron emission of a field emission device manufactured by the method according to the present invention. FIG. 5A shows screen brightness in conditions of an anode voltage of 1 KV, a gate voltage of 55 V, and an electron emission current of 1.13 mA, while FIG. 5B shows screen brightness in conditions of an anode voltage of 1 KV, a gate voltage of 60 V, and an electron emission current of 2 mA.

Referring to FIGs. 4A through 5B, the field emission device manufactured by the conventional method has a lower electron emission current than that manufactured by the present invention and is very likely to emit little electrons. However, the field emission device of the present invention can solve a short circuiting, has a very high electron emission current, and ensures uniform brightness.

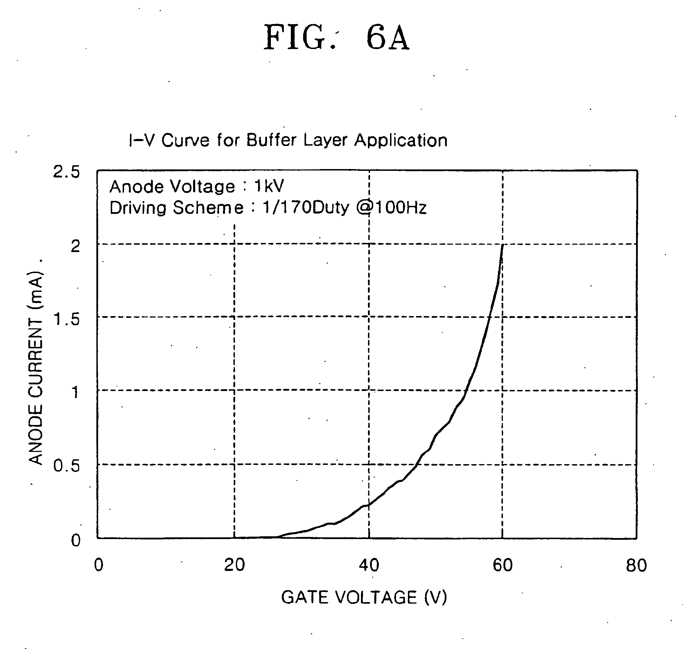

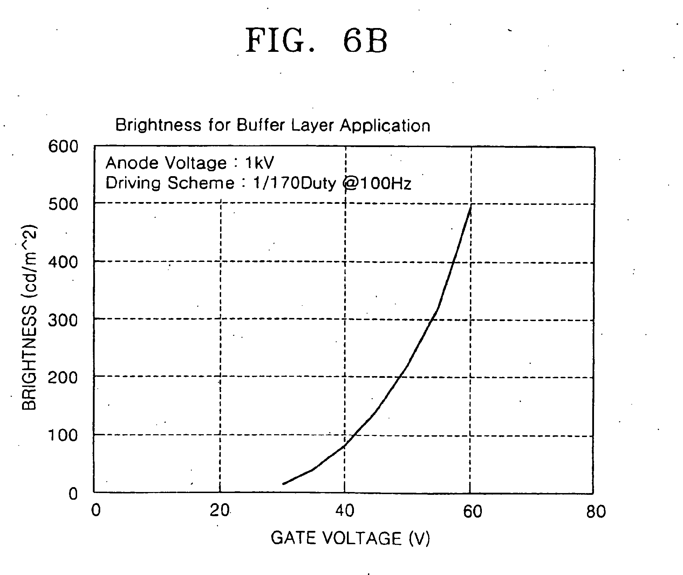

FIG. 6A is a graph showing a relationship between anode current and gate voltage of the field emission device manufactured by the method of the present invention, and FIG. 6B is a graph showing a relationship between brightness and gate voltage thereof. As shown in FIG. 6A, the field emission device manufactured by the present invention shows a very high current and brightness. Since the result of FIG. 6B is obtained when a light emission surface remains spaced about 6 cm from a sensor, it is assumed that the brightness of the field emission device for practical use is higher than the result of FIG. 6.

According to the present invention, a field emission device having a very high current and brightness can be obtained. Also, a lift-off process is effectively performed using an isolation layer such that a short circuiting between a gate electrode and emitters is prevented. Thus, an improved electron emission device can be obtained. A resistive material that remains at the lower portions of an electron emission material layer allows a current to be uniformly supplied even to emission points of CNTs or nanoparticles, which are uniformly distributed in the highly conductive electron emission material layer. Thus, electrons can be uniformly emitted throughout the entire electron emission material layer. Consequently, the life span of the field emission device can be highly increased.

The field emission device of the present invention can be applied to devices requiring emission of electrons, for example, display devices. While the present invention has been particularly shown and described with reference to preferred embodiments thereof, it will be understood by those of ordinary skill in the art that various changes in form and details may be made therein without departing from the scope of the present invention as defined by the following claims.

## Claims

1. A method of manufacturing a field emission device, the method comprising:
(a) preparing a substrate structure, the substrate structure comprising a substrate, a cathode electrode formed on the substrate, a gate insulating layer formed on the cathode electrode, the gate insulating layer having holes that expose portions of the cathode electrode, and a gate electrode having gate holes that correspond to the holes, the cathode electrode, the gate insulating layer, and the gate electrode being sequentially stacked on the substrate;
(b) forming a sacrificial layer on a surface of the substrate structure excluding the portions of the cathode electrode, which are exposed by the holes, and on inner walls of the holes;
(c) forming an isolation layer on the sacrificial layer, the isolation layer for preventing electron emission materials for forming emitters from contacting the sacrificial layer;
(d) forming an electron emission material layer by depositing the emission electron materials on the surface of the substrate structure where the sacrificial layer is formed, the electron emission material layer filling the holes;
(e) removing the isolation layer and the electron emission materials, which are formed on the sacrificial layer, and forming the emitters inside the holes using the electron emission material layer by performing a lift-off process using an etchant, the lift-off process for removing the sacrificial layer that is formed on the surface of the gate electrode and the inner walls of the holes; and
(f) firing the emitters.

2. The method of claim 1, wherein the electron emission materials are one of carbon nanotubes and nanoparticles.

3. The method of claim 1, wherein the electron emission material layer and the sacrificial layer are formed of a photoresist.

4. The method of claim 1. wherein the electron emission material layer (50) is formed of a conductive material.

5. The method of claim 4, wherein the electron emission material layer (50) is selected from the group consisting of a paste, a sol-gel, and a slurry solution.

6. The method of claim 4 or 5, wherein the conductive material is formed of Ag.

7. The method of any preceding claim, wherein the isolation layer (70) is formed of a resistive material.

8. The method of claim 7, wherein the resistive material is formed of one selected from the group consisting of SiO₂, MgO, a-Si, and p-Si.

9. The method of any one of claims 1 to 6, wherein the isolation layer (70) is formed using one selected from the group consisting of a paste, a sol-gel, and a slurry solution.

10. The method of any one of claims 1 to 6, wherein the isolation layer (70) is formed using an IPA/H₂O solution containing polyvinyl alcohol.

## Patentansprüche

1. Verfahren zur Herstellung einer Feldemissionsvorrichtung, wobei das Verfahren umfasst:
(a) Vorbereiten einer Substratstruktur, wobei die Substratstruktur ein Substrat (10), eine auf dem Substrat ausgebildete Kathodenelektrode (20), eine auf der Kathodenelektrode ausgebildete Gate-Isolierschicht (30), wobei die Gate-Isolierschicht Öffnungen aufweist, die Teile der Kathodenelektrode freilegen, und eine Gate-Elektrode (40) mit Gate-Öffnungen, die den Öffnungen entsprechen, umfasst, wobei die Kathodenelektrode, die Gate-lsolierschicht und die Gate-Elektrode sequentiell auf dem Substrat aufgestapelt sind,
(b) Ausbilden einer Opferschicht (60) auf einer Oberfläche der Substratstruktur mit Ausnahme der Teile der Kathodenelektrode, die durch die Öffnungen freigelegt sind, und auf Innenwänden der Öffnungen,
(c) Ausbilden einer Isolierschicht (70) auf der Opferschicht, wobei die Isolierschicht dazu vorgesehen ist, zu verhindern, dass Elektronenemissionsmaterialien zum Ausbilden von Emittern mit der Opferschicht in Kontakt kommen,
(d) Ausbilden einer Elektronenemissionsmaterialschicht (50) durch Abscheiden der Elektronenemissionsmaterialien auf der Oberfläche der Substratstruktur, auf der die Opferschicht ausgebildet ist, so dass die Elektronenemissionsmaterialschicht die Öffnungen füllt,
(e) Entfernen der Isolierschicht (70) und der Elektronenemissionsmaterialien, die auf der Opferschicht (60) ausgebildet sind, und Ausbilden der Emitter (50a) im Inneren der Öffnungen unter Verwendung der Elektronenemissionsmaterialschicht durch Ausführen eines Lift-off-Prozesses unter Verwendung eines Ätzmittels, wobei der Lift-off-Prozess dazu vorgesehen ist, die Opferschicht zu entfernen, die auf der Oberfläche der Gate-Elektrode und den Innenwänden der Öffnungen ausgebildet ist, und
(f) Erhitzen der Emitter (50a).

2. Verfahren nach Anspruch 1, wobei die Elektronenemissionsmaterialien Kohlenstoff-Nanoröhrchen oder Nanopartikel sind.

3. Verfahren nach Anspruch 1, wobei die Elektronenemissionsmaterialschicht (50) und die Opferschicht (60) aus einem Photoresist gebildet werden.

4. Verfahren nach Anspruch 1, wobei die Elektronenemissionsmaterialschicht (50) aus einem leitfähigen Material gebildet wird.

5. Verfahren nach Anspruch 4, wobei die Elektronenemissionsmaterialschicht (50) aus der Gruppe bestehend aus einer Paste, einem Sol-Gel und einer Suspensionslösung gewählt wird.

6. Verfahren nach Anspruch 4 oder 5, wobei das leitfähige Material aus Ag gebildet wird.

7. Verfahren nach einem der vorhergehenden Ansprüche, wobei die Isolierschicht (70) aus einem resistiven Material gebildet wird.

8. Verfahren nach Anspruch 7, wobei das resistive Material aus einem ausgewählt aus der Gruppe bestehend aus SiO₂, MgO, a-Si und p-Si gebildet wird.

9. Verfahren nach einem der Ansprüche 1 bis 6, wobei die lsolierschicht (70) unter Verwendung eines ausgewählt aus der Gruppe bestehend aus einer Paste, einem Sol-Gel und einer Suspensionslösung gebildet wird.

10. Verfahren nach einem der Ansprüche 1 bis 6, wobei die Isolierschicht (70) unter Verwendung einer Polyvinylalkohol enthaltenden IPA/H₂O-Lösung gebildet wird.

## Revendications

1. Procédé de fabrication d'un dispositif à émission de champ, le procédé comprenant:
(a) la préparation d'une structure de substrat, la structure de substrat comprenant un substrat (10), une électrode de cathode (20) formée sur le substrat, une couche d'isolation de grille (30) formée sur l'électrode de cathode, la couche d'isolation de grille possédant des orifices qui exposent des parties de l'électrode de cathode, et une électrode grille (40) ayant des orifices de grille qui correspondent aux orifices, l'électrode de cathode, la couche d'isolation de grille, et l'électrode grille étant empilées de manière séquentielle sur le substrat ;
(b) la formation d'une couche sacrificielle (60) sur une surface de la structure de substrat excluant les parties de l'électrode de cathode, qui sont exposées par les orifices, et sur les parois intérieures des orifices ;
(c) la formation d'une couche d'isolation (70) sur la couche sacrificielle, la couche d'isolation étant destinée à empêcher que les matériaux à émission d'électrons formant les émetteurs d'entrer en contact avec la couche sacrificielle;
(d) la formation d'une couche de matériau à émission d'électrons (50) en déposant les matériaux à émission d'électrons sur la surface de la structure de substrat où la couche sacrificielle est formée, la couche de matériau à émission d'électrons remplissant les orifices ;
(e) le retrait de la couche d'isolation (70) et des matériaux à émission d'électrons, qui sont formés sur la couche sacrificielle (60) et la formation des émetteurs (50a) à l'intérieur des orifices utilisant la couche de matériau à émission d'électrons en exécutant un processus de retrait utilisant un agent de gravure, le processus de retrait destiné à retirer la couche sacrificielle qui est formée sur la surface de l'électrode grille et les parois internes des orifices ; et
(f) le chauffage des émetteurs (50a).

2. Procédé de la revendication 1, dans lequel les matériaux à émission d'électrons sont soit des nanotubes de carbone soit des nanoparticules.

3. Procédé de la revendication 1, dans lequel la couche de matériau à émission d'électrons (50) et la couche sacrificielle (60) sont composées d'une résine photo-sensible.

4. Procédé de la revendication 1, dans lequel la couche de matériau à émission d'électrons (50) est composée d'un matériau conducteur.

5. Procédé de la revendication 4, dans lequel la couche de matériau à émission d'électrons (50) est sélectionnée dans le groupe composé d'une pâte, d'un sol-gel et d'une solution chargée.

6. Procédé de la revendication 4 ou 5, dans lequel le matériau conducteur est composé d'Ag.

7. Procédé de l'une quelconque des revendications précédentes, dans lequel la couche d'isolation (70) est composée d'un matériau résistif.

8. Procédé de la revendication 7, dans lequel le matériau résistif est composé d'un matériau sélectionné dans le groupe composé de SiO₂, MgO, a-Si, et p-Si.

9. Procédé de l'une quelconque des revendications 1 à 6, dans lequel la couche d'isolation (70) est formée en utilisant un matériau sélectionné dans le groupe composé d'une pâte, d'un sol-gel et d'une solution chargée.

10. Procédé de l'une quelconque des revendications 1 à 6, dans lequel la couche d'isolation (70) est formée en utilisant une solution IPA/H₂O contenant de l'alcool polyvinylique.
